Europäisches Patentamt

European Patent Office

Office européen des brevets

(19)

(11) **EP 1 206 120 A1**

(12) **EUROPÄISCHE PATENTANMELDUNG**

(43) Veröffentlichungstag:
　**15.05.2002　Patentblatt 2002/20**

(51) Int Cl.⁷: **H04N 1/50**, H04N 1/60

(21) Anmeldenummer: **00124253.6**

(22) Anmeldetag: **10.11.2000**

(84) Benannte Vertragsstaaten:
　**AT BE CH CY DE DK ES FI FR GB GR IE IT LI LU
　MC NL PT SE TR**
　Benannte Erstreckungsstaaten:
　**AL LT LV MK RO SI**

(71) Anmelder: **GRETAG IMAGING Trading AG
　5430 Wettingen (CH)**

(72) Erfinder:
　• **Waldner, Stephan
　8057 Zürich (CH)**

　• **Kündig, Armin
　8046 Zürich (CH)**
　• **Keller, Guido
　8106 Adlikon (CH)**

(74) Vertreter: **Schwabe - Sandmair - Marx
　Stuntzstrasse 16
　81677 München (DE)**

(54) **Verminderung von Artefakten bei reproduzierten Bildern**

(57)　Ein Verfahren zum Vermindern von Artefakten bei der auf Bilddaten beruhenden Reproduktion eines Bildes mit einer Vielzahl von Bildpunkten durch eine spezifische Bilddarstellungsvorrichtung, wobei die Bildpunkte Erscheinungseigenschaften aufweisen, mit folgenden Schritten: Vorrichtungscharakteristiken, die die Erscheinungseigenschaften von Bildpunkten, die durch die spezifische Bilddarstellungsvorrichtung in Antwort auf Bilddaten erzeugt werden, und die Abhängigkeit der Erscheinungseigenschaften von der den Bilddaten zugeordneten Position beschreiben, werden bereitgestellt oder eingegeben (S12), Reproduktions-Bilddaten werden eingegeben, und die Reproduktions-Bilddaten werden basierend auf den Vorrichtungscharakteristiken in Abhängigkeit von den den Bilddaten zugeordneten Positionen korrigiert.

Fig. 1

EP 1 206 120 A1

**Beschreibung**

Die vorliegende Erfindung betrifft ein Verfahren zur Verminderung von Artefakten bei der Reproduktion oder Darstellung von Bildern, insbesondere fotografischen Bildern, die eine Vielzahl von Bildpunkten aufweisen. Die Erfindung betrifft weiter Bilddarstellungsvorrichtungen, wie z.B. Drucker (Tintenstrahldrucker, Laserdrucker, Thermodrucker usw.), Monitore (z.B. LCD-Monitore oder Kathodenröhrenmonitore bzw. CRT-Monitore) und Vorrichtungen zur Erzeugung von Bildern auf strahlungsempfindlichen (insbesondere lichtempfindlichen) Medien (z.B. Fotopapier), wie z.B. mit Lasern oder Monitoren arbeitenden Fotoprintern oder DMDs (Digital Mirror Devices). Insbesondere betrifft die Erfindung Bilddarstellungsvorrichtungen, die Fotografien darstellen, wobei die Darstellung der Fotografie auch die Erzeugung von Fotografien auf Medien, insbesondere Fotopapier oder Normalpapier, umfasst. Bei den Bilddaten handelt es sich insbesondere um fotografische Bilddaten, die durch ein Bilderfassungsgerät, wie z.B. einen Fotoapparat, eine Kamera (z.B. Filmkamera, Digitalkamera, Videokamera) erfasst wurden.

Die Erfindung betrifft ferner ein fotografisches Labor, insbesondere Minilab, das die erfindungsgemäße Bilddarstellungsvorrichtung oder das erfindungsgemäße Verfahren oder Großraumlabor verwendet.

Die Erfindung betrifft weiter ein Programm, dass das erfindungsgemäße Verfahren durchführt, sowie sonstige Verwendungen des Verfahrens.

Eine hohe Qualität reproduzierter Bilder, die auf digitalen Bilddaten beruhen, wird insbesondere im Fotografiebereich gefordert. Zur Reproduktion werden, insbesondere im Fotobereich, eine Reihe verschiedener Bilddarstellungsvorrichtungen verwendet, neben Monitoren, insbesondere Bilddarstellungsvorrichtungen, die das Bild auf einem Medium reproduzieren. Dazu werden insbesondere verschiedene Drucker oder Schreibvorrichtungen, die mit Strahlen (z.B. Lichtstrahlen oder Partikelstrahlen, wie Elektronenstrahlen) in strahlungsempfindlichen Medien (lichtempfindlichen Medien) Bilder erzeugen, verwendet. Allen Bildreproduktionstechniken ist gemeinsam, dass Bilddaten, die das darzustellende Bild definieren, in Bilddaten umgewandelt werden, die zur Steuerung der Bilddarstellungsvorrichtung geeignet sind, so dass die Bilddarstellungsvorrichtung eine möglichst exakte Reproduktion des durch die ursprünglichen Bilddaten festgelegten Bildes erzeugt.

Die vorliegende Erfindung betrifft Vorrichtungen und Verfahren, bei denen das Bild (insbesondere Bitmap-Bild) mit einer Vielzahl von einzelnen Bildpunkten reproduziert wird und die Bilddaten die Soll-Eigenschaften der einzelnen Bildpunkte beschreiben. Die Eigenschaften der Bildpunkte sind Erscheinungseigenschaften, die den visuellen Eindruck, den der Bildpunkt an einer bestimmten Position in einem Bild auf einen menschlichen Betrachter hat, beschreiben oder die, anders ausgedrückt, die visuelle oder optische Erscheinung oder das optische bzw. visuelle Erscheinungsbild ("appearance") des Bildpunktes in dem Bild beeinflussen oder bestimmen. Zu den Erscheinungseigenschaften der Bildpunkte zählen insbesondere die geometrischen Eigenschaften des Bildpunktes, wie dessen relative Lage (Abstand) zu den nächsten Bildpunkten bzw. Abweichung von einer Sollposition und Bildpunktgröße und Bildpunktform. Eigenschaften des Bildpunktes sind beispielsweise auch sein Farbwert bzw. seine Position im Farbraum, wie er sich z.B. durch einen Lab-Vektor beschreiben lässt, wie z.B. Farbe, Farbsättigung, Farbton, Helligkeit, Luminanz usw. Auch können die Erscheinungseigenschaften für eine definierte Beleuchtung des Bildes z.B. mit einer Standardlichtquelle (z.B. D65) unter einem gegebenen Öffnungswinkel definiert werden. Erscheinungseigenschaften können auch durch die Farbwerte benachbarter Bildpunkte eines Bildpunktes und deren farbliche Wechselwirkung für einen Betrachter sowie durch Eigenschaften eines Mediums (z. B. Glanzpapier, mattes Papier), insbesondere hinsichtlich der Reflexion eines Beleuchtungslichtes bestimmt werden.

Bisherige Verfahren bei der Bilddarstellung verlassen sich darauf, dass die Bilddarstellungsvorrichtung auf jedes eingehende Bilddatum immer gleich antwortet, ungeachtet, an welcher Stelle bzw. Position des Bildes der Bildpunkt erzeugt wird. Zu diesem Zweck werden sog. Profile der Bilddarstellungsvorrichtung erzeugt, um z.B. eine durch die eingehenden Bilddaten definierte Farbe in einer gewünschten Weise zu reproduzieren. Ungeachtet, an welcher Stelle der Bildpunkt erzeugt wird, werden so z.B. eingehende RGB-Daten in ausgehende CMYK-Daten für jeden Bildpunkt in der gleichen Art und Weise erzeugt.

Diese Vorgehensweise führt dann zu zufriedenstellenden Ergebnissen, wenn die Bilddarstellungsvorrichtung für jeden zu erzeugenden Bildpunkt in der gleichen Art und Weise auf eingehende Bilddaten antwortet. Dies ist aber in der Realität nicht der Fall. So werden z.B. bei einem Tintenstrahldrucker nicht alle Bildpunkte an der vorgesehenen Position mit der vorgesehenen Punktgröße und dem vorgesehenen Farbwert erzeugt. Die tatsächlichen Erscheinungseigenschaften der Bildpunkte stimmen also (je nach Position) nicht mit den gewünschten Erscheinungseigenschaften überein. Ähnliches gilt bei den anderen oben erwähnten Bilddarstellungsvorrichtungen. So können z.B. die verschiedenen Laser eines Laserstrahldruckers unterschiedliche Bildpunktgrößen erzeugen oder die LCD-Transistoren eines Monitors nicht gleichmäßig beabstandet sein.

Um derartige Fehler bei der Bilddarstellung möglichst zu vermeiden, wird im Stand der Technik ein hoher mechanischer Aufwand betrieben, um eine gleichmäßige Antwort der Bilddarstellungsvorrichtung für alle zu erzeugenden Bildpunkte möglichst zu garantieren oder es wird eine Ausmittelung der Abweichungen in der Ansteuerung der Bilddarstellungsvorrichtung angestrebt. Beispiele für Tintenstrahldrucker sind z.B. in der US 5,844,585 und der US 5,289,208 zu finden.

Die Probleme des Standes der Technik werden im Folgenden noch näher anhand von Tintenstrahldruckern erläutert. Ein häufiges Problem bei Tintenstrahldruckern stellt die Fehlplatzierung der Bildpunkte (Dots) dar, die durch eine Fehlausrichtung und unterschiedliche Ausspritzgeschwindigkeit der einzelnen Düsen erzeugt werden. Weiter können die einzelnen Düsen unterschiedliche Punktgrößen erzeugen. Werden mehrere Druckköpfe verwendet, so stellt auch die exakte Ausrichtung der Druckköpfe zueinander ein Problem dar. Um die Probleme zu lösen, wurde zumindest teilweise ein häufiges Reinigen der Düsen vorgeschlagen. Auch wurde eine Lösung zur Erhöhung der Genauigkeit bei der gegenseitigen Ausrichtung und Ansteuerung der Druckköpfe vorgeschlagen (US 5,289,208). Auch mehrere Druck-Durchgänge mit denselben Düsen im gleichen Druckbereich wurden vorgeschlagen (US 5,844,585).

Durch die vorgeschlagenen Lösungen erniedrigt sich aber die Druckgeschwindigkeit in dem Fall mehrerer Durchgänge, erhöht sich der Verbrauch der Tinte in dem Fall häufiger Reinigung und erhöhen sich die Kosten im Falle einer erhöhten mechanischen Genauigkeit.

Aufgabe der Erfindung ist es, eine hohe Bildqualität bei einer Bildreproduktion auch bei einer minderen mechanischen Präzision der Bilddarstellungsvorrichtung zu gewährleisten.

Vorstehende Aufgabe wird durch die Gegenstände der unabhängigen Ansprüche gelöst, vorteilhafte Weiterbildungen gehen aus den abhängigen Ansprüchen hervor.

Bei dem erfindungsgemäßen Verfahren werden zumindest ein Teil der Erscheinungseigenschaften (wie z.B. Farbwert und/oder Positionsabweichung) der einzelnen Bildpunkte, die sich für eine bestimmte Bilddarstellungsvorrichtung ergeben, dem erfindungsgemäßen Verfahren zum Vermindern von Artefakten bei der Bilddarstellung zu Grunde gelegt. Ein vorteilhafter Aspekt der Erfindung ist, dass die insbesondere positionsabhängige Beeinflussung (Bildpunktposition) der Erscheinungseigenschaften durch Eigenschaften der Bilddarstellungsvorrichtung (Vorrichtungscharakteristiken) berücksichtigt wird. Diese Erscheinungseigenschaften werden mittels eines Testbildes, das durch die spezifische Bilddarstellungsvorrichtung erzeugt wurde, insbesondere positionsabhängig ermittelt. Dazu kann eine optische Messvorrichtung, wie z.B. eine Kamera (z.B. digitale Kamera), verwendet werden.

Die einem Testbild zu Grunde gelegten Testbilddaten werden vorzugsweise so gewählt, dass zumindest ein Großteil der für einen Bildpunkt möglichen, unterschiedlichen Erscheinungseigenschaften im Testbild oder den Testbildern dargestellt werden. Die Messungen erfolgen vorzugsweise so, dass Beeinflussungen der Erscheinungseigenschaften, wie z.B. Abweichungen der Position eines Bildpunktes von seiner Sollposition, Änderungen des Abstandes eines Bildpunktes zu seinen Nachbarn, Änderungen der Farbdichte des Bildpunktes, Änderungen der Form des Bildpunktes und/oder Änderungen des Farbwertes des Bildpunktes aus den gemessenen Erscheinungseigenschaften abgeleitet werden können.

In Abhängigkeit von der Art der verwendeten Bilddarstellungsvorrichtung können die Messungen zur Bestimmung der Erscheinungseigenschaften der Bildpunkte vereinfacht werden. Zum Beispiel genügt es bei einem Tintenstrahldrucker, die Charakteristiken einer Düse zu charakterisieren, um Erscheinungseigenschaften von mit derselben Düse erzeugten Bildpunkten auch bei anderen Positionen derjenigen Bildpunkte vorhersagen zu können, die mit derselben Düse erzeugt werden.

Vorzugsweise werden die Testbildpunkte so gewählt, dass dadurch zumindest ein Großteil positionsabhängiger Änderungen von Erscheinungseigenschaften der Bildpunkte für eine spezifische Bilddarstellungsvorrichtung erfasst werden. Die Testbildpunkte werden also bevorzugt so gewählt, dass sie die positionsabhängigen Charakteristiken der spezifischen Bilddarstellungsvorrichtung bei der Reproduktion von Bildern charakterisieren.

Sind z.B. auf die oben erwähnte Weise die Erscheinungseigenschaften von Bildpunkten erfasst, die von einer spezifischen Bilddarstellungsvorrichtung in Antwort auf eingehende, zu reproduzierende Bilddaten erzeugt werden, und ist weiter die Abhängigkeit der Erscheinungseigenschaften der Bildpunkte von der Position der Bildpunkte im Bild erfasst, so werden diese, die spezifische Bilddarstellungsvorrichtung charakterisierende Informationen (hierin auch "Vorrichtungscharakteristiken" genannt) in das erfindungsgemäße Verfahren eingegeben oder bereitgestellt. Ist das erfindungsgemäße Verfahren z.B. als Programm realisiert, so können die charakterisierenden Informationen bzw. Vorrichtungscharakteristiken in einem Speicher gespeichert werden, auf den das Programm zurückgreift, oder auch einen Teil des Programmcodes bilden.

Die Vorrichtungscharakteristiken beeinflussen die Erscheinungseigenschaften der aufgrund von Reproduktions-Bilddaten erzeugten Bildpunkte. Sie beschreiben insbesondere die positionsabhängige Beeinflussung, die insbesondere typisch für die Bilddarstellungsvorrichtung ist. Die Vorrichtungscharakteristiken beschreiben insbesondere eine von den Eigenschaften der Bilddarstellungsvorrichtung abhängige Beeinflussung der Erscheinungseigenschaften. Die Eigenschaften der Bilddarstellungsvorrichtung werden insbesondere durch die Hardware und/oder Software der Bilddarstellungsvorrichtung festgelegt, die die Bilddaten verarbeitet, beispielsweise durch die Eigenschaften der Bildpunkterzeuger (siehe weiter unten).

Stehen nun die Vorrichtungscharakteristiken, die eine spezifische Bilddarstellungsvorrichtung charakterisieren, bereit, so werden erfindungsgemäß die folgenden Schritte durchgeführt. Bilddaten werden eingegeben, die der Reproduktion eines Bildes zu Grunde gelegt werden sollen und im Folgenden deshalb als "Reproduktions-Bilddaten" bezeichnet werden. Die Reproduktions-Bilddaten legen für die einzelnen Bildpunkte in dem zu reproduzierenden Bild die Sollpositionen und die Solleigenschaften der zu reproduzierenden Bildpunkte fest. Die Reproduktions-Bilddaten beschreiben ein gewünschtes Bild oder Sollbild, das möglichst exakt reproduziert werden soll. Die nach dem erfindungsgemäßen Verfahren verarbeiteten Reproduktions-Bilddaten werden als Steuerwerte bezeichnet, die insbesondere die Ist-Eigenschaften des zu reproduzierenden Bildes beschreiben und mit deren insbesondere eine Bilddarstellungsvorrichtung angesteuert wird.

Die eingegebenen Reproduktions-Bilddaten werden verwendet, um die zu erwartenden Erscheinungseigenschaften der Bildpunkte bei den verschiedenen Positionen zu bestimmen oder zu errechnen. Bei der Bestimmung werden die Vorrichtungscharakteristiken, die die spezifische Bilddarstellungsvorrichtung charakterisieren, herangezogen, um die für (jeden) Bildpunkt zu erwartenden Erscheinungseigenschaften für alle Positionen oder zumindest einen Großteil der Positionen der Bildpunkte zu bestimmen bzw. zu errechnen. Die Positionen können z. B. relativ zur Bilddarstellungsvorrichtung (z. B. Gerätekörper), relativ zu einem Bildmedium (z. B. Rand eines Papiers oder einer Bildanzeige) oder relativ zum Bild bestimmt werden.

Auf diese Art und Weise lässt sich somit ein, bei einer unkorrigierten Reproduktion zu erwartendes Bild in einem ersten Schritt bestimmen, das wiederum in einem zweiten Schritt einer Korrektur der Reproduktions-Bilddaten zu Grunde gelegt werden kann, um so Steuerwerte für die Bilderzeugung festzulegen bzw. zu bestimmen. Auch können in einem einzigen Schritt direkt die Steuerwerte unter Berücksichtigung der Vorrichtungscharakteristiken bestimmt werden. Vorzugsweise werden die Steuerwerte in Abhängigkeit von den für die einzelnen Bildpunkte zu erwartenden Erscheinungseigenschaften erzeugt. Diese Erzeugung wird so vorgenommen, dass bei einer Reproduktion des Bildes basierend auf den Steuerwerten ein Bild erzeugt wird, das, insbesondere für einen menschlichen Betrachter (z.B. nach CIE-Norm), optisch bzw. visuell geringere Abweichungen von dem Sollbild aufweist als ein Bild, das bei Nicht-Berücksichtigung der Vorrichtungscharakteristiken erzeugt wird, wenn also beispielsweise die Reproduktionsbilddaten direkt in eine Bilddarstellungsvorrichtung eingegeben werden oder einem herkömmlichen Halbtonverfahren unterzogen werden. Das erfindungsgemäße Verfahren kann also insbesondere ein herkömmliches Halbtonverfahren ersetzen oder es ergänzen.

Die durch die charakterisierenden Eigenschaften bzw. Vorrichtungscharakteristiken einer spezifischen Bilddarstellungsvorrichtung erzeugten Artefakte werden bevorzugt beseitigt oder vermindert, indem das visuelle Zusammenspiel der Erscheinungseigenschaften benachbarter Bildpunkte bei der Betrachtung des Bildes durch einen menschlichen Betrachter berücksichtigt wird. Die einzelnen Erscheinungseigenschaften der Bildpunkte des Unterbereichs wirken also zusammen, um die (gesamte) optische bzw. visuelle Erscheinung ("appearance") des Unterbereichs zu bestimmen. Dies gilt insbesondere dann, wenn die einzelnen Bildpunkte für einen Betrachter nicht mehr auflösbar sind. So wird z.B. der visuelle bzw. optische Eindruck eines Unterbereiches eines Bildes oder die optische Eigenschaft eines Unterbereichs dadurch beeinflusst, wie die Bildpunkte in dem Unterbereich geometrisch verteilt sind und wie die Farbwerte der einzelnen Bildpunkte sind. Eine Verdichtung der Bildpunkte kann z.B. eine Abnahme der Helligkeit des Unterbereichs bewirken, falls der Hintergrund des Unterbereichs heller als die Bildpunkte ist. Auch können relative Lageverschiebungen zwischen den Bildpunkten den mittleren Farbwert des Unterbereichs, so wie er für einen Betrachter erscheint, verändern. Dies gilt insbesondere dann, wenn Halbtonverfahren oder Zittermatrix- bzw. Dithermatrixverfahren zur Bilderzeugung verwendet werden. "Halbtonverfahren" umfassen nicht nur "Dithermatrixverfahren" sondern auch "Fehlerdiffusionsverfahren", wobei "Dithermatrixverfahren" mit abgegrenzten nicht überlappenden Stellen arbeiten und "Fehlerdiffusionsverfahren" Pixel für Pixel durchs Bild gehen, so dass die Unterbereiche überlappen. Sowohl Dithermatrixverfahren als auch Fehlerdiffusionsverfahren können zur Darstellung von Halbtönen (Zwischen-Farbwerten) verwendet werden.

Vorzugsweise werden zu erwartende optische bzw. visuelle Eigenschaften von Unterbereichen basierend auf den zu erwartenden Erscheinungseigenschaften der Bildpunkte in dem Unterbereich bestimmt oder errechnet. Hierauf basierend, werden dann Steuerwerte derartig erzeugt, dass die optischen Eigenschaften der Unterbereiche des reproduzierten Bildes weniger von den optischen Eigenschaften der Unterbereiche des Sollbildes abweichen, als dies bei einer Reproduktion ohne Berücksichtigung der Vorrichtungscharakteristiken der Fall wäre.

Das Halbtonverfahren kann in Verbindung mit den Vorrichtungscharakteristiken dazu verwendet werden, in einem ersten Schritt ein zu erwartendes Ist-Bild oder einen zu erwartenden Farbwert eines Unterbereichs oder Bildpunktes zu errechnen. In einem zweiten Schritt werden dann die Bilddaten korrigiert, so dass das Halbtonverfahren ein Ergebnis bleibt, das näher am Sollwert ist. Alternativ oder zusätzlich kann auch das Halbtonverfahren, insbesondere der Fehlerdiffusionsverfahren basierend auf den Vorrichtungscharakteristiken so modifiziert werden, dass das modifizierte Halbtonverfahren (in einem Schritt) Ergebnisse liefert, die näher am Soll-Ergebnis liegen, als dies beim nicht-modifizierten Halbtonverfahren der Fall wäre.

Vorteilhaft beschreiben die Vorrichtungscharakteristiken der Bilderzeugungsvorrichtung, die dem Verfahren zu Grunde gelegt werden, zumindest die räumlichen Eigenschaften der Bildpunkte und deren Positionsabhängigkeit. Räumliche Eigenschaften der Bildpunkte sind Eigenschaften der Bildpunkte, die die visuelle bzw. optische Erscheinung des Bildpunktes auf Grund der (relativen) räumlichen Lage des Bildpunktes (zur Sollposition) und/oder der Gestalt und/oder Größe beeinflussen. Zu den räumlichen Eigenschaften der Bildpunkte zählt insbesondere ihre relative Lage (Entfernung, Abstand, Winkelbeziehung) zu den benachbarten Bildpunkten und/oder die Größe des Bildpunktes. Haben die Bildpunkte, die durch eine spezifische Bilderzeugungsvorrichtung erzeugt werden, an verschiedenen Positionen verschiedene räumliche Eigenschaften, obwohl den Bildpunkten gleiche Bilddaten (z.B. gleicher zu erzeugender Farbwert) zu Grunde liegen, so entstehen Artefakte. Diese durch die räumlichen Eigenschaften erzeugten Artefakte werden erfindungsgemäß durch Farbwertänderungen der Bildpunkte derartig ausgeglichen, dass sie für einen menschlichen Betrachter weniger auffällig sind. Dazu können basierend auf den Reproduktions-Bilddaten und den Vorrichtungscharakteristiken, die die räumlichen Eigenschaften der damit erzeugten Bildpunkte und deren Positionsabhängigkeit beschreiben, bei einer unkorrigierten Reproduktion zu erwartende räumliche Eigenschaften der Bildpunkte bestimmt oder berechnet werden. Diese Bestimmung erfolgt vorzugsweise positionsabhängig basierend auf den Vorrichtungscharakteristiken.

Wurden die zu erwartenden räumlichen Eigenschaften der Bildpunkte zumindest so weit bestimmt, wie eine Positionsabhängigkeit zu erwarten ist, so werden aus den zu erwartenden räumlichen Eigenschaften zu erwartende Unterbereichseigenschaften bestimmt. Beispielsweise wird die Nähe eines Bildpunktes zu benachbarten Bildpunkten in einem Unterbereich bestimmt. Ein Unterbereich umfasst mehr als einen Bildpunkt.

Basierend auf den zu erwartenden Unterbereichseigenschaften werden dann die Steuerwerte errechnet bzw. ermittelt. Dabei erfolgt die Berechnung so, dass Abweichungen der räumlichen Eigenschaften der Bildpunkte in einem Unterbereich (beispielsweise Abweichungen von der Sollposition) von durch die Reproduktions-Bilddaten vorgegebenen Soll-Eigenschaften (beispielsweise keine Abweichung von einer Sollposition) durch die Änderung zumindest eines Farbwertes eines Bildpunktes in dem Unterbereich so ausgeglichen wird, dass ein menschlicher Betrachter, der das mittlere Erscheinungsbild des Unterbereichs betrachtet, eine verminderte Abweichung von dem Soll-Erscheinungsbild des Unterbereichs wahrnimmt. Haben z.B. die räumlichen Eigenschaften des Unterbereichs zur Folge, dass die Bildpunkte des Unterbereichs weiter auseinander liegen als dies sein sollte und bedingt dies eine Aufhellung des Erscheinungsbildes des Unterbereichs für einen menschlichen Betrachter, so wird der Farbwert zumindest eines Bildpunktes im Unterbereich durch die Korrektur dunkler gemacht.

Es gibt Bilddarstellungsverfahren, bei denen Unterbereichen des zu erzeugenden Bildes ein gewisser Farbwert zugeordnet wird, der durch das gemeinsame Erscheinungsbild eines Bildpunktes und benachbarter Punkte in dem Unterbereich erzeugt wird. Beispiele für diese Verfahren sind Dithermatrixverfahren, die eine Untergruppe der Halbtonbildverfahren darstellen. Derartige Unterbereiche, denen eine gemeinsame optische Eigenschaft, wie z.B. ein Farbwert, zugeordnet ist, werden hierin als Zellen bezeichnet. Während sich die oben genannten Unterbereiche auch überlappen können oder sich gegenseitig umschließen können, also eine beliebige Form annehmen können, sind die Zellen aneinander angrenzende, nicht überlappende Unterbereiche des Bildes. Die je nach Verfahren überlappenden oder nichtüberlappenden Unterbereiche werden vorzugsweise so gewählt, dass sie das ganze Bild oder zumindest den überwiegenden Teil davon abdecken bzw. umfassen. Das erfindungsgemäße Verfahren kann Unterbereich für Unterbereich durchgeführt werden. Bei überlappenden Unterbereichen wird das Verfahren bevorzugt sequentiell durchgeführt. Bei überlappenden Unterbereichen wird vorzugsweise Bildpunkt für Bildpunkt entsprechend dem Fehlerdiffusionsverfahren vorgegangen.

Werden Bilder mittels derartiger Unterbereiche, z. B. Zellen (im folgenden rein beispielhaft für "Zellen" erläutert) erzeugt, so wird z.B. bei den Dithermatrixverfahren häufig eine Zelle nicht vollständig mit Bildpunkten ausgefüllt. In diesem Fall trägt auch der Zwischenraum zwischen den Bildpunkten (z.B. der Blatthintergrund bei einem Drucker) zu der (mittleren) visuellen bzw. optischen Erscheinung der Zelle bei. Die Vorrichtungscharakteristiken bzw. spezifischen Eigenschaften einer Bilddarstellungsvorrichtung können nun Abweichungen der einzelnen Bildpunkte einer Zelle von ihren gewünschten Erscheinungseigenschaften bewirken. Diese Abweichungen der einzelnen Bildpunkte einer Zelle bewirken eine Änderung der Gesamterscheinung der Zelle. So können Änderungen der räumlichen Eigenschaften der Bildpunkte (z.B. Abweichungen der Lage von Soll-Positionen) nicht nur zu einer Änderung der Helligkeit der Zelle in Zusammenwirkung mit dem Zwischenraum (Hintergrund) führen, sondern auch allgemeiner zu einer Änderung des Farbwertes der Zelle. Vorzugsweise wird die Änderung der optischen Gesamterscheinung der Zelle basierend auf den zu erwartenden Erscheinungseigenschaften der Bildpunkte der Zelle bestimmt bzw. errechnet. Basierend auf der somit zu erwartenden Erscheinungseigenschaft der Zelle werden dann diejenigen Eigenschaften der Bildpunkte der Zelle durch eine Korrektur des Reproduktions-Bilddatensatzes geändert, die eine Verminderung der Abweichung der Gesamterscheinung der Zelle von einer Sollerscheinung bewirken. Bei der Korrektur der Bilddaten wird selbstverständlich berücksichtigt, welche Erscheinungseigenschaften der Bildpunkte durch eine Korrektur der Bilddaten beeinflussbar sind und welche nicht. Ist z.B. nicht die räumliche Eigenschaft (z.B. relative Lage zu benachbarten Bildpunkten) beeinflussbar, sondern nur der Farbwert oder die Größe des Bildpunktes, so werden nur die beeinflussbaren Erscheinungseigenschaften durch Korrektur der Bilddaten so geändert, dass eine Verminderung der Abweichung zum Sollbild erzielt wird. Wie oben erwähnt kann auch ohne den Weg über die Berechnung zu erwartender Eigenschaften eine direkte Berechnung der Steuerwerte, z. B. im Rahmen eines Halbtonverfahrens, unter Berücksichtigung der Vorrichtungscharakteristiken erfolgen.

Bei der Erzeugung der Steuerwerte, die korrigierten Reproduktions-Bilddaten entsprechen können, werden bevorzugt Korrekturverfahren eingesetzt, die bei der Korrektur der Bilddaten, die einem bestimmten Bildpunkt zugeordnet sind, die Reproduktions-Bilddaten und insbesondere die Erscheinungseigenschaften der benachbarten Bildpunkte mit berücksichtigt. Insbesondere wird die Auswirkung der Korrektur eines Bilddatums auf die Korrektur benachbarter Bilddaten mit berücksichtigt. Insbesondere werden hierzu Fehlerdiffusionsverfahren eingesetzt. Auch können verschiedene Korrekturvarianten simuliert werden und die optimale Variante mit den geringsten Abweichungen vom Sollerscheinungsbild der Zelle bzw. des Unterbereichs ausgewählt werden. Eine "Korrektur" bedeutet hierin, dass bei Bestimmung der Steuerwerte, abweichend vom Stand der Technik, Vorrichtungscharakteristiken verwendet werden.

Ob eine Korrektur durchgeführt wird oder nicht, kann an Schwellenwerte oder Toleranzen gebunden werden. Werden die Schwellenwerte oder Toleranzen überschritten, so wird die Korrektur durchgeführt. Die Schwellenwerte oder Toleranzen können für das gesamte Bild oder Teilbereiche oder Unterbereiche bzw. Zellen des Bildes festgelegt werden.

Insbesondere können Wartungsverfahren an der Bilddarstellungsvorrichtung durchgeführt werden, wie z.B. die Reinigung von Düsen bei Tintenstrahldruckern, falls die Toleranzen oder Schwellenwerte überschritten werden. Führt die Durchführung der Wartungsverfahren immer noch nicht zu einer Unterschreitung der Schwellenwerte, so wird beispielsweise erst dann die Korrektur durchgeführt.

Auch können Warnsignale ausgegeben werden, wenn auch nach Durchführung der Korrektur bzw. Wartung noch Toleranzen oder Schwellenwerte überschritten wer-, den, die die Abweichung des Sollbildes von einem auf Basis der korrigierten Reproduktions-Bilddaten erzeugten Bildes beschreiben.

Bestimmte Bilddarstellungsvorrichtungen, wie z.B. Tintenstrahldrucker oder Laserdrucker, verwenden mehrere Bildpunkterzeuger (wie z.B. Düsen oder Laser), die jeweils eine Vielzahl von Bildpunkten in einem Bild erzeugen. Die einzelnen Bildpunkterzeuger können unterschiedliche, charakteristische Eigenschaften haben, die die Vorrichtungscharakteristiken der Bilddarstellungsvorrichtung bestimmen. Beispielsweise können die Düsen eines Tintenstrahldruckers oder die Laserstrahlen der Laser eines Laserdruckers nicht exakt parallel zueinander ausgerichtet sein. Dies führt dann zu positionsabhängigen Erscheinungseigenschaften der Bildpunkte. Um diese zu erfassen, können Testbilder mit einer optischen Messeinrichtung ausgemessen werden, die zumindest den Großteil der mit den verschiedenen Bilderzeugern darstellbaren Bildpunkte zeigen.

Die gemessenen Bildpunkte und ihre Erscheinungseigenschaften werden dann den einzelnen Bildpunkterzeugern zugeordnet, um diese so zu charakterisieren. Die zu erwartenden Erscheinungseigenschaften der Bildpunkte bei einer Erzeugung basierend auf Reproduktions-Bilddaten werden bestimmt, indem ermittelt wird, durch welchen Bildpunkterzeuger der einzelne Bildpunkt erzeugt wird. Basierend auf den charakteristischen Eigenschaften (auch "Charakteristiken" genannt) des Bildpunkterzeugers werden dann die Erscheinungseigenschaften der Bildpunkte bestimmt, die mit dem Bildpunkterzeuger zu erzeugen sind.

Bei dem erfindungsgemäßen Verfahren können die Vorrichtungscharakteristiken vor Eingabe der Reproduktions-Bilddaten für alle Positionen aus den Charakteristiken der Bildpunkterzeuger und deren Zuordnung zu Positionen in einem zu erzeugenden Bild bestimmt werden. Die Zuordnung der Bildpunkterzeuger zu Positionen kann aber auch erst bei der Bestimmung zu erwartender Erscheinungseigenschaften von Bildpunkten, die auf Reproduktions-Bilddaten basieren, vorgenommen werden.. Dies ist insbesondere dann vorzuziehen, wenn die Positionsabhängigkeit der Vorrichtungscharakteristiken von den Reproduktions-Bilddaten abhängig ist, wenn beispielsweise abhängig von den Reproduktions-Bilddaten bestimmt wird, welche Bildpunkterzeuger für welche Positionen eingesetzt werden. In diesem Fall erfolgt eine Bestimmung der zu erwartenden Erscheinungseigenschaften von zu reproduzierenden Bildpunkten basierend auf den eingegebenen Reproduktions-Bilddaten. Die eingegebenen Reproduktions-Bilddaten bestimmen, welcher Bildpunkt mit welchem Bildpunkterzeuger erzeugt wird. Aus den Charakteristiken des bei der Erzeugung verwendeten Bildpunkterzeugers werden dann die zu erwartenden Erscheinungseigenschaften der Bildpunkte bestimmt.

Die Erfindung betrifft weiter ein Programm, das bei Ablauf auf einem Computer das erfindungsgemäße Verfahren durchführt. Dabei können die Vorrichtungscharakteristiken als Daten dem Programm zugeführt werden und/ oder Bestandteil des Programmkodes sein.

Vorzugsweise umfassen erfindungsgemäße Bilddarstellungsvorrichtungen eine Steuereinrichtung, die das Verfahren gemäß der Erfindung ausführt. Die durch das Verfahren erzeugten korrigierten Reproduktions-Bilddaten werden zur Erzeugung des Bildes durch eine Bilddarstellungsvorrichtung verwendet. Bei der spezifischen Bilddarstellungsvorrichtung, die die Vorrichtungscharakteristiken aufweist, handelt es sich vorzugsweise um dieselbe Bilddarstellungsvorrichtung, die für die Bilderzeugung verwendet wird, oder um eine Bilddarstellungsvorrichtung ähnlichen Typs und somit ähnlicher spezifischer Eigenschaften.

Vorzugsweise weisen fotografische Labors, wie z.B. Großlabors oder Minilabs, mindestens eine erfindungsgemäße Bilddarstellungsvorrichtung auf, um fotografische Bilddaten zu reproduzieren. Bei Minilabs handelt es sich um kleine fotografische Labors mit einer Standfläche von wenigen Quadratmetern und insbesondere einer Standfläche von kleiner als einem Quadratmeter. Bei einem fotografischen Labor wird Bildinformation digital, z.B. auf die digitalen Datenträgern oder über ein Netzwerk, oder auch klassisch (analog), z.B. über Filme, eingegeben. Die eingegebene Bildinformation wird digitalisiert, um so digitale Bildinformation zu erhalten. Die digitale Bildinformation wird dann verarbeitet, wobei die erfindungsgemäße Bilddarstellungsvorrichtung bzw. das erfindungsgemäße Verfahren verwendet wird.

Die Erfindung betrifft weiter die Verwendung des erfindungsgemäßen Verfahrens, des erfindungsgemäßen Programms oder der erfindungsgemäßen Bilddarstellungsvorrichtung auf dem Gebiet der Fotografie zur Erzeugung von fotografischen Darstellungen oder zur Ausgabe der korrigierten, fotografischen Reproduktions-Bilddaten.

Die Ausgabe der Steuerwerte (z. B. korrigierten Reproduktions-Bilddaten) erfolgt vorzugsweise über eine Datenschnittstelle oder über Datenträger, wie z.B. CDs oder DVDs oder andere digitale Datenträger. Die Ausgabe kann auch mittels der digitalen Datenschnittstelle zu einem Netzwerk, insbesondere LAN oder Internet, erfolgen. Die Steuerwerte können beispielsweise in einem beliebigen Farbraum (z. B. RGB, CMYK, Lab, ...) dargestellt werden und beispielsweise Dichtewerke darstellen.

Beispielsweise kann ein Endverbraucher oder ein Fotogeschäft Testbilder zu einem zentralen, erfindungsgemäßen Fotolabor senden, die eine Bestimmung der Vorrichtungscharakteristiken der verwendeten Bilddarstellungsvorrichtung (z.B. Tintenstrahldrucker) erlauben. Basierend hierauf kann dem Endverbraucher oder Fotogeschäft ein erfindungsgemäßes Programm zur Verfügung gestellt werden, das angepasst an die Vorrichtungscharakteristiken seiner Bilddarstellungsvorrichtung erzeugt wurde. Auch können, falls Reproduktions-Bilddaten vom Endverbraucher empfangen werden, korrigierte Reproduktions-Bilddaten erzeugt werden, die an die Bilddarstellungsvorrichtung (Drucker) des Endverbrauchers angepasst sind und diesem z.B. über Internet zugesendet. Der Endverbraucher kann dann die so erzeugte Bilddatei als Basis für seine Darstellung mit seiner Bilddarstellungsvorrichtung (Drucker, Monitor etc.) verwenden, um somit ein optimal an die Bilddarstellungsvorrichtung angepasstes Bild betrachten zu können.

| | |
|---|---|
| Fig. 1 | zeigt ein Flussdiagramm, das die Einbindung des erfindungsgemäßen Verfahrens in einen Druckprozess zeigt; |
| Fig. 2 | ist ein Ablaufdiagramm, das die Verarbeitung von Bilddaten zur Bilddarstellung bzw. zum Bildausdruck zeigt; |
| Fig. 3 | ist eine Punktmatrix; |
| Fig. 4 | ist eine Tabelle zum Erfassen der Charakteristiken von Tintenstrahldüsen; |
| Fig. 5 | zeigt die Abhängigkeit der Tondichte von verschiedenen Düsen und der Punktgröße; |
| Fig. 6a und 6b | erläutern ein Verfahren zur Tondichtekompensation; und |
| Fig. 7 | beschreibt ein Ablaufdiagramm für eine Ausführungsform des erfindungsgemäßen Fehlerkorrekturverfahrens. |

Bei der folgenden Erläuterung von Ausführungsbeispielen wird beispielhaft die Durchführung der Erfindung bei einem Tintenstrahldrucker erläutert. Zuerst erfolgt die Bestimmung der Vorrichtungscharakteristiken des Tintenstrahldruckers, soweit sie nicht schon bekannt sind. Bei einem Tintenstrahldrucker wird beispielsweise davon ausgegangen, dass die Positionsabhängigkeit der Erscheinungseigenschaften der von dem Tintenstrahldrucker erzeugten Bildpunkte durch die Charakteristiken der Tintenstrahldüsen (Bildpunkterzeuger) bedingt sind.

Zur Bestimmung der Düsencharakteristiken wird beispielsweise wie folgt vorgegangen:

a) Testmuster werden gedruckt, die aus Punkten (Dots) bestehen, die bevorzugt unter Verwendung aller Düsen gedruckt werden, wobei bevorzugt jede Druckfarbe des Tintenstrahldruckers eingesetzt wird. Für den Fall, dass der Druckkopf mehrere Punktgrößen (Dotgrößen) drucken kann, also z.B. die Tropfengröße variieren kann, kann es vorteilhaft sein, Muster für alle möglichen Punktgrößen zu erstellen. Insgesamt werden also bevorzugt für jede Düse (Bildpunkterzeuger) alle möglichen Arten der Bildpunkterzeugung durchgespielt.

b) Die Bilder der gedruckten Testmuster werden aufgezeichnet bzw. abgespeichert. Hierzu werden bevorzugt optische Messvorrichtungen, wie z.B. digitale Kameras, Spektrometer und Scanner verwendet, die insbesondere eine Erfassung der Position der Bildpunkte bzw. deren relativer Lage zu benachbarten Bildpunkten, der Form der Bildpunkte, der Größe der Bildpunkte und/oder des Farbwertes bzw. der Farbdichte der Bildpunkte erlauben.

c) Die Erscheinungseigenschaften der Bildpunkte, wie insbesondere Größe und Farbdichte bzw. Helligkeit und die Positionen der gedruckten Bildpunkte, werden von den aufgezeichneten bzw. gespeicherten Bildern bestimmt.

d) Die Bildpunkte werden den einzelnen Düsen zugeordnet, um die Charakteristiken der Düsen zu bestimmen. Hierzu werden insbesondere die Abweichungen von für die Düsen vorgegebenen idealen Werten berechnet.

Infolge der Düsencharakterisierung ergeben sich die drei folgenden möglichen Fälle:

- Alle Werte der Düsen (Bildpunkterzeuger) liegen innerhalb einer vorgegebenen, erlaubten Spanne. Somit kann das Drucken ohne eine spezielle Datenverarbeitung oder andere Verfahren begonnen werden.
- Eine nicht tolerierbare Anzahl von Düsen (Bildpunkterzeugern) ist funktionsuntüchtig oder weist derartige Fehlfunktionen auf, dass sie durch das erfindungsgemäße Verfahren nicht kompensiert werden können. Beispielsweise können die Düsen verstopft sein oder völlig fehlausgerichtet sein. Neben der Beeinträchtigung der Druckqualität kann sich dadurch auch eine Beeinträchtigung der Druckgeschwindigkeit ergeben. In diesen Fällen wird z.B. ein Warnsignal ausgegeben oder ein Fehlerbeseitigungsverfahren eingeleitet, das insbesondere die Mechanik der Bildpunkterzeuger betrifft. Beispielsweise wird ein Druckkopfreinigungsvorgang durchgeführt. Danach wird eine erneute Charakterisierung der Düsen (Bildpunkterzeuger) wiederholt.

- Falls die Düsen (Bildpunkterzeuger) mit ihren Abweichungen in der tolerierbaren Spanne liegen, werden die Abweichungen von dem Idealwert durch das erfindungsgemäße Verfahren, insbesondere durch Datenverarbeitung oder Software kompensiert.

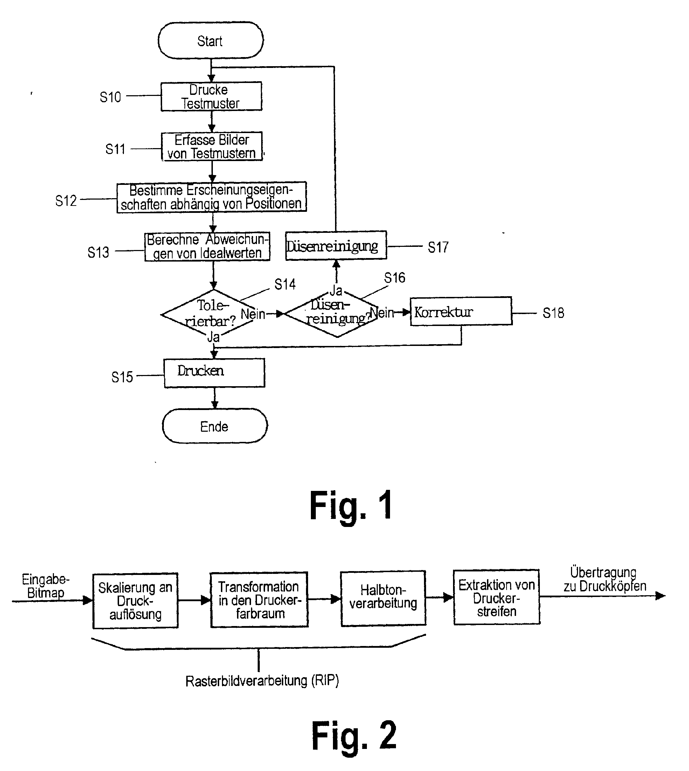

Die oben dargestellten Fälle und der daraus sich ergebende Ablauf sind in der Fig. 1 dargestellt. Anstelle der dort gezeigten Düsenreinigung können auch jegliche andere Formen von Fehlerkorrekturverfahren, wie z.B. eine Neujustage der Ausrichtung der Düsen, durchgeführt werden. Bei anderen Typen von Bilddarstellungsvorrichtungen, wie z.B. Laserdruckern, kann z.B. eine Neujustage der verwendeten Laser durchgeführt werden.

Zu Beginn des in Fig. 1 gezeigten Verfahrens werden in einem Schritt S10 Drucktestmuster gedruckt. Danach werden die Bilder der Testmuster im Schritt S11 erfasst. Dann werden die Positionen (z.B. kartesische Koordinaten x, y), die Größe und die Farbdichte der Punkte bzw. Dots bestimmt. In dem Schritt S12 werden also die Erscheinungseigenschaften der Bildpunkte in Abhängigkeit von den Positionen bestimmt. Danach werden in einem Schritt S13 Abweichungen von Idealwerten bestimmt.

Im Schritt S14 wird überprüft, ob die Abweichungen innerhalb einer vorgegebenen Toleranz liegen. Falls dem so ist, wird im Schritt S15 mit dem Drucken begonnen und nach dem Druck endet das Verfahren der Fig. 1.

Liegen die Abweichungen nicht innerhalb der Toleranz im Schritt S14, so wird in einem nächsten Schritt S16 überprüft, ob eine Düsenreinigung notwendig ist. Falls dem so ist, wird in einem Schritt S17 eine Düsenreinigung durchgeführt. Danach werden, beginnend mit dem Schritt S10, erneut die Erscheinungseigenschaften bestimmt.

Ist eine Düsenreinigung nicht notwendig oder nicht erfolgversprechend, so geht das Verfahren der Fig. 1 zum Schritt S18 über, um die Abweichungen in den Druckdaten zu kompensieren. Nicht erfolgversprechend ist eine Düsenreinigung z.B. dann, wenn es sich bei den Abweichungen um räumliche Abweichungen handelt, die z.B. durch Neigungen der Düsen hervorgerufen werden. Wenn dagegen die Tropfengröße und somit die Bildpunktgröße kleiner ist als vorgesehen, so kann eine Reinigung durchaus erfolgversprechend sein. Gleiches gilt, wenn gewisse Düsen überhaupt keine Tinte abgeben und somit eine Verstopfung der Düsen nahe liegt. Basierend auf derart festgelegten Kriterien und zugeordneten Toleranzen, wird dann im Schritt S16 entweder die Düsenreinigung nach Schritt S17 oder die Kompensation bzw. Korrektur der Reproduktions-Bilddaten nach Schritt S18 gewählt. Anders ausgedrückt, erfolgt im Schritt S16 die Wahl zwischen einer Hardwarekorrektur bzw. mechanischen Fehlerkorrektur (S17) und einer Softwarekorrektor bzw. Bilddatenkorrektur (S18).

Fig. 2 zeigt den Datenfluss von den eingehenden, "rohen" Bilddaten bis zu den Steuerdaten für den Drucker. Bei den eingehenden Bilddaten handelt es sich z.B. um RGB-Bilddaten, die ein Bild als Bitmap beschreiben. Da die Bildauflösung des eingehenden Bitmaps häufig nicht mit der Auflösung des Druckers übereinstimmt, erfolgt eine Skalierung und somit Anpassung an die Druckerauflösung. Ist die Auflösung angepasst, so erfolgt in einem nächsten Schritt die Transformation der Bilddaten und insbesondere deren Farbwerte in den Druckerfarbraum. Kann der Drucker z.B. vier Farben darstellen, z.B. Cyan (C), Magenta (M), Gelb (Y) und Schwarz (K), so erfolgt die Transformation z.B. von einem RGB-Farbraum in einen CMYK-Farbraum. Dabei ist z.B. einer jeden Farbe eine bestimmte Anzahl Düsen zugeordnet, wobei bei gewissen Druckertypen eine Düse verschiedene Bildpunktgrößen bzw. Tropfengrößen erzeugen kann, wobei somit die Dichte des Farbwerts verändert wird. (Gegebenenfalls kann eine Umwandlung in den Druckerfarbraum vor der Skalierung durchgeführt werden.)

Die Erzeugung von Zwischenfarbwerten, die nicht durch die Farben des Druckers, also z.B. nicht alleine durch C oder M oder Y oder K, darstellbar sind, erfolgt durch das sog. Halbtonverfahren. Durch dieses Halbtonverfahren können z.B. auch Zwischengrauwerte oder Zwischenluminanzwerte erzeugt werden, die nicht durch eine einzelne Düse darstellbar sind. Es sind verschiedene Halbtonverfahren wie z. B. Dithermatrixverfahren oder Fehlerdiffusionsverfahren (Error Diffusion) bekannt (siehe z. B. Digital color halftoning; Henry Kang; Bellingham, WA; SPIE Optical Engineering Press 1999).

Die drei Stufen der Skalierung auf die Druckerauflösung, Transformation in den Druckerfarbraum und Halbtonverarbeitung werden auch als Rasterbildverarbeitung bezeichnet. Nach der Rasterbildverarbeitung werden aus dem so gewonnenen Bilddatensatz Daten für das Drucken von Streifen ("Swaths") extrahiert. Diese Druckerstreifen (Swaths) werden durch einen Druckkopf mit mehreren Düsen bei einem Abtastvorgang (Hauptabtastung) erzeugt. Sind diese Daten für die Druckerstreifen extrahiert, so werden sie zu dem Druckkopf übertragen, um diesen basierend auf den Daten für die Druckerstreifen anzusteuern.

Das erfindungsgemäße Verfahren wird vorzugsweise zwischen der Eingabe des Bitmaps und der Übertragung zu den Druckerköpfen durchgeführt, besonders vorzugsweise wird das erfindungsgemäße Verfahren im Rahmen der Rasterbildverarbeitung durchgeführt und dort besonders bevorzugt während der Halbtonverarbeitung.

Herkömmliche Verfahren gehen bei der Verarbeitung nach der Fig. 2 davon aus, dass bei gleichen Bilddaten alle Bildpunkte die gleichen Erscheinungseigenschaften haben. Insbesondere gehen die herkömmlichen Verfahren bei Tintenstrahldruckern davon aus, dass sich alle Düsen gleich verhalten. Das erfindungsgemäße Verfahren weicht hiervon ab. Gemäß der Erfindung werden die Charakteristiken der einzelnen Düsen berücksichtigt, um somit Rückschlüsse auf die Erscheinungseigenschaften der durch die Düsen erzeugten Bildpunkte vornehmen zu können.

Die Daten werden erfindungsgemäß grundsätzlich so manipuliert, dass bei einem Ausdruck ein Betrachter in einem normalen Abstand zu dem Ausdruck die Artefakte nicht mehr erkennen kann, obwohl mikroskopisch betrachtet bzw. bei einem sehr nahen Betrachtungsabstand, die Artefakte immer noch erkennbar sind. Die Korrektur erfolgt also so, dass ein normaler Betrachtungsabstand von insbesondere größer als 10 cm bei einem menschlichen Betrachter dazu führt, dass eine dadurch bedingte visuelle Mittelung mehrerer Bildpunkte zu einer Verbergung der Artefakte für den Betrachter führt. Dadurch, dass ein Betrachter einzelne Bildpunkte nicht mehr visuell auflösen kann, können die Erscheinungseigenschaften benachbarter Bildpunkte erfindungsgemäß mit herangezogen werden, um Abweichungen der Erscheinungseigenschaften der einzelnen Punkte auszugleichen. Dieses erfindungsgemäße Prinzip ist nicht nur bei Tintenstrahldruckern, sondern bei jeglicher Art von Bilddarstellungsvorrichtung anwendbar.

Wie bereits oben erwähnt, wird vorzugsweise das erfindungsgemäße Verfahren bei der Halbtonverarbeitung durchgeführt. Als Ergebnis der in Fig. 2 gezeigten Umwandlung in den Druckerfarbraum und Skalierung auf die Druckerauflösung (z.B. 720 x 720 dpi) ergibt sich eine Matrix mit Elementen, die die kontinuierlichen Tondichten $d_{Cl}$, ... $d_{Cn}$ darstellen, wobei C1 bis Cn die Primärfarben des Druckerfarbraums sind (z.B. CMYK). Die Matrix stellt ein Beispiel für Reproduktions-Bilddaten dar.

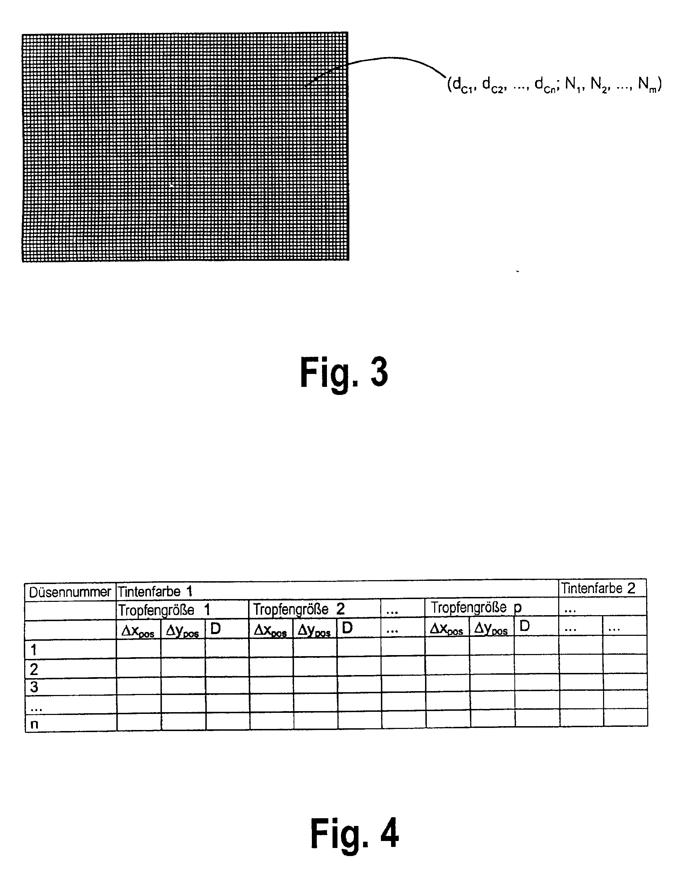

Fig. 3 zeigt ein Beispiel einer derartigen Matrix. Bei der in Fig. 3 gezeigten Matrix beschreibt jedes Element einen Bildpunkt. Dieser Bildpunkt wird durch die Düsen $N_1$ bis $N_m$ erzeugt, wobei 1 bis m die Farben der im Drucker vorhandenen Tinten sind (z. B. CMYK plus light cyan und light magenta), und entsprechend kann der Bildpunkt die durch die kontinuierlichen Werte $d_{Cl}$ bis $d_{Cn}$ definierte Farbe annehmen oder sich diesem zumindest annähern (siehe weiter unten). Insbesondere besteht eine genaue Zuordnung zwischen einem Element der Matrix, der Position des Bildpunktes im Bild und der zur Bildpunkterzeugung verwendeten Düsen. Die Matrixelemente entsprechen den Reproduktions-Bilddaten mit den zur Erzeugung dieses Bildpunktes verwendeten Düsen.

Falls die Bildpunkte nach dem Verschachtelungsverfahren bzw. Interleave-Verfahren erzeugt werden, so muss dies bei der Zuordnung der entsprechenden Matrixelemente zu den Düsen berücksichtigt werden. Bei dem Interleave-Verfahren wird z.B. der Druckkopf nach einem Durchgang (Swath) um den halben Abstand zwischen zwei Düsen nach unten versetzt, um in die Zwischenräume zu drucken.

Ein Druckkopf besteht beispielsweise aus mehreren Düsenreihen, wobei jede Reihe einer Farbe zugeordnet ist. Die Düsen einer Reihe werden als Düsennummern durchgezählt. Gibt es z.B. sechs verschiedene Reihen für sechs. Farben und in jeder Reihe 48 Düsen, so ergibt sich insgesamt eine Gesamtzahl von Düsen von 6 x 48 = 288. Ausgehend von Position und Farbe eines Bildpunktes und eventuell unter Berücksichtigung des Interleave-Verfahrens lässt sich somit ein Bildpunkt bzw. das entsprechende Matrixelement einer bestimmten Düse zuordnen. Die Testausdrucke werden bevorzugt so durchgeführt, dass bei einer optischen Vermessung eine derartige Zuordnung zweifelsfrei möglich ist. Insbesondere wird bei einem Testausdruck bevorzugt vermieden, dass sich durch verschiedene Düsen erzeugte Bildpunkte überlappen.

Sind eine oder mehrere Testausdrucke erfolgt, aus denen eine genaue Zuordnung der Bildpunkte zu den einzelnen Düsen bei einer optischen Vermessung des Bildes möglich ist, so wird z.B. eine Tabelle erstellt, wie in Fig. 4 gezeigt ist, in der die Charakteristiken aller Düsen gespeichert werden. Die Tabelle in Fig. 4 enthält z.B. für jede Düsennummer und für jede Farbe (das heißt für die entsprechende Düsenreihe) von der Tropfengröße (Erscheinungseigenschaft) des mit einer bestimmten Düse erzeugten Tropfens abhängige Daten über die Positionsabweichungen (Erscheinungseigenschaft) in horizontaler Richtung ($\Delta x_{pos}$) und vertikaler Richtung ($\Delta y_{pos}$) sowie den Farbwert D (Erscheinungseigenschaft) für eine gegebene Druckauflösung. Dabei ist eine Düse genau durch die Düsennummer und die Tintenfarbe identifiziert.

Erfolgt die optische Messung z.B. nicht spektral aufgelöst, sondern mit Farbfiltern, so kann der Farbwert D in der Tabelle einfach durch die Farbdichte bzw. den Grauwert D ersetzt werden.

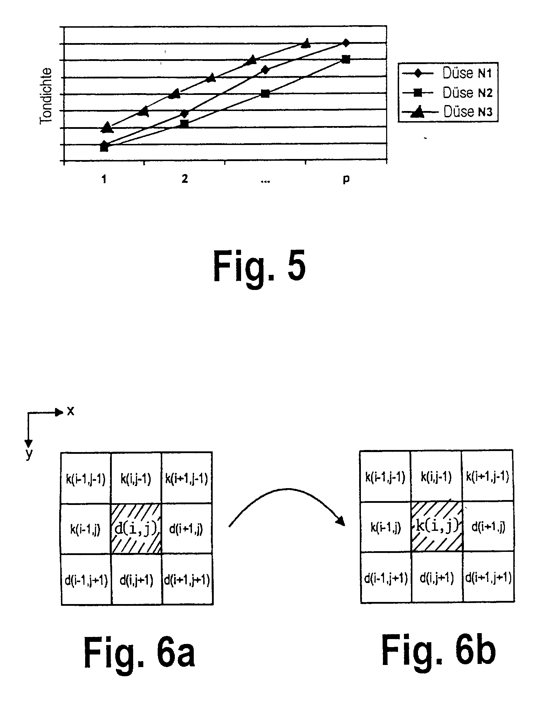

Ein Beispiel für eine von der Düsennummer abhängige Beziehung zwischen der Tropfengröße und dem Grauwert zeigt Fig. 5.

Im Folgenden wird die Farbwertkompensation bzw. Grauwertkompensation beschrieben. Hierzu wird beispielsweise mit einer 3x3-Kernroutine (Kernel) die Matrix Zeile für Zeile von links nach rechts durchgeschritten. Selbstverständlich sind beliebige andere Muster abweichend von dem 3x3-Muster (3x3-Unterbereich) möglich. Bevorzugt werden jedoch mindestens drei Matrixelemente durch das Muster erfasst. Bei der 3x3-Kernroutine sind bei einem gegebenen Element (i, j) (siehe schraffiertes Feld in Fig. 6a und 6b), Elemente, die oberhalb des gegebenen Elements liegen und die auf der Linie links von dem gegebenen Element liegen, bereits verarbeitet worden. Diese Elemente haben eine zugeordnete Bildpunktgröße k. Die Elemente unterhalb und rechts von dem gegebenen Element einschließlich des Elements (i, j) sind in Fig. 6a noch nicht verarbeitet worden. Diesen Elementen ist noch eine kontinuierliche Farbwertdichte bzw. Tondichte (Grauwert) d zugeordnet. Den verarbeiteten Elementen wurde bereits durch die Zuordnung einer Bildpunktgröße bzw. Tropfengröße, die nur diskrete Werte annehmen kann, ein diskreter Wert zugeordnet.

Bei dem in Fig. 6a und 6b gezeigten Beispiel ist nur eine Farbe berücksichtigt. Das Verfahren kann leicht auf mehrere Farben, andere Kernel-Größen und andere Wege des Fortschreitens des Kernels durch die Bildmatrix angewendet werden.

Um die Variationen der Tondichte zu kompensieren, kann z.B. ein Fehlerdiffusionsverfahren implementiert werden, wie es beispielsweise auch schon bei einem Algorithmus für eine Halbtonverarbeitung Anwendung finden kann. Denn auch dort werden kontinuierliche Farbtonbilder in wenige diskrete Farben, die der Drucker erzeugen kann, transformiert.

Das Fehlerdiffusionsverfahren geht Element für Element vor und entscheidet welche Bildpunktgröße k gedruckt werden sollte, und zwar durch Wahl der Tropfengröße k', bei der der Ausdruck

$$|d\ (i,\ j) - D_{k'}\ (N\ (i,\ j))\ |$$

minimal wird. Dabei handelt es sich bei $D_{k'}$ (N (i, j)) um die Farbdichten, die durch alle möglichen Tropfengrößen k' von derjenigen Düse N erzeugt werden können, die den Bildpunkt auf Grund der bekannten Zuordnung zwischen Element und Düse drucken wird. Liegt eine Druckerfarbe in unterschiedlichen Verdünnungen vor (z. B. Cyan und light Cyan), so wird die minimale Differenz zwischen der Farbwertdichte d und der möglichen Farbdichten $D_{k'}$ aller Verdünnungen der entsprechenden Primärfarbe gewählt. Im Gegensatz zu den bei der Halbtonverarbeitung bekannten Fehlerdiffusionsverfahren werden die gemessenen und somit realen Tondichten bzw. Farbwerte einer jeden einzelnen Düse berücksichtigt und nicht. angenommene theoretische Werte, die für alle Düsen gleich sind. Erfindungsgemäß können somit unterschiedliche Charakteristiken der einzelnen Düsen und somit Vorrichtungscharakteristiken berücksichtigt werden.

Im Folgenden wird beschrieben, wie Artefakte auf Grund von Positionsabweichungen (Erscheinungseigenschaften) der Bildpunkte kompensiert werden können. Derartige Abweichungen werden vorzugsweise in einem nächsten Schritt des Fehlerdiffusionsprozesses kompensiert. Bei diesem Schritt wird berücksichtigt, dass die von einem Betrachter wahrgenommene Tondichte sowohl von der Tondichte eines Bildpunktes als auch von der Tondichte des Hintergrundes bzw. des Zwischenraums zwischen den Bildpunkten bestimmt wird. Ist die Tondichte des Hintergrundes heller als die Dichte der Bildpunkte, was normalerweise beim Drucken auf ein weißes Papier durch einen üblichen Tintenstrahldrucker zutrifft, so nimmt die von einem Betrachter wahrgenommene Dichte D' ab, falls der Abstand zu den benachbarten Punkten größer als der ideale Abstand ist und die wahrgenommene Dichte nimmt zu, falls der Abstand kleiner ist.

Vorzugsweise wird deshalb ein Maß berechnet, das den mittleren Abstand zu den benachbarten Punkten beschreibt. Dies kann z.B. durch die Summe der Abstände $\Delta_{tor}$ des Punktes (i, j) zu den benachbarten bereits verarbeiteten Punkten (i-1, j); (i-1, j-1); (i, j-1); (i+1, j-1) beschrieben werden.

Aus den in den Klammerausdrücke angegebenen Indizes ergeben sich die Sollpositionen der Elemente bzw. die zugeordnete Sollposition der Bildpunkte, wobei sich aus den Sollpositionen die zugeordneten Düsen ergeben und hieraus wiederum die Positionsabweichungen $\Delta x_{pos}$, $\Delta y_{pos}$, die in die oben erwähnte Abstandsberechnung eingehen. Die Positionsabweichungen stellen zu erwartende Erscheinungseigenschaften der Bildpunkte eines Unterbereichs dar, der aus den Positionen (i, j); (i-1, j); (i-1, j-1); (i, j-1) und (i+1, j-1) besteht. Die von einem Betrachter wahrgenommene Dichte (aufgrund der Vorrichtungscharakteristiken zu erwartende Erscheinungseigenschaft), die das optische Zusammenwirken der Farbwerte der Bildpunkte und des Hintergrundes berücksichtigt, kann z.B. durch eine Polynomreihe, entwickelt nach der gemessenen Dichte D und unter Berücksichtigung der Ab-standssumme $\Delta_{tot}$ wie folgt berechnet werden:

$$D' = D \cdot f_0 + D \cdot \left( \frac{\Delta_{tot} - \Delta_0}{\Delta_0} \right) \cdot f_1 + D \cdot \left( \frac{\Delta_{tot} - \Delta_0}{\Delta_0} \right)^2 \cdot f_2$$

wobei $f_1$ und $f_2$ Wichtungsfaktoren oder Verstärkungsfaktoren sind, die experimentell zu bestimmen sind und z.B. insbesondere vom bedruckten Papier und/oder den verwendeten Farbstoffen abhängig sind. Weiter entspricht $\Delta_0$ der Summe der Distanzen, wenn die Positionsabweichungen $\Delta x_{pos}$ und $\Delta y_{pos}$ aller berücksichtigen Punkte gleich Null sind. Falls $\Delta_{tot} = \Delta_0$ gilt somit D' = D·$f_0$. Falls $\Delta_{tot} \ddagger \Delta_0$ wird D' den Abweichungen entsprechend angepasst.

Der Fehler, der dadurch erzeugt wird, dass eine diskrete, wahrgenommene Tondichte D' (zu erwartende Erscheinungseigenschaft) einem Element zugeordnet wird, der eine kontinuierliche Tondichte d aufweist, lautet dann wie folgt:

$$\Delta d = d - D'$$

Dieser Fehler wird dann unter den benachbarten Rasterpunkten, die noch nicht verarbeitet worden sind, verteilt. Die kontinuierlichen Tondichten der benachbarten Rasterelemente (Reproduktions-Bilddaten) werden z.B. wie folgt modifiziert bzw. korrigiert:

$$d' (i+1, j) = d (i+1, j) + \Delta d \cdot df_{1,0},$$

$$d' (i+1, j+1) = d (i+1, j+1) + \Delta d \cdot df_{1,1},$$

$$d' (i, j+1) = d (i, j+1) + \Delta d \cdot df_{0,1},$$

$$d' (i-1, j+1) = d (i-1, j+1) + \Delta d \cdot df_{-1,1}.$$

Bei den Faktoren $df_{i,j}$ handelt es sich um sog. Diffusionsfaktoren (z.B. 7/16, 1/16, 5/16, 3/16 für jeweilig $df_{1,0}$, $df_{1,1}$, $df_{0,1}$, $df_{-1,1}$ nach Floyd & Steinberg) nach R.W. Floyd and L. Steinberg. "An adaptive algorithm for spatial grey scale". Proc. Soc. Inf. Display. Vol. 17, No. 2, pp. 75-77, 1976. Diese Diffusionsfaktoren definieren die Verteilung des Fehlers unter den benachbarten Pixeln.

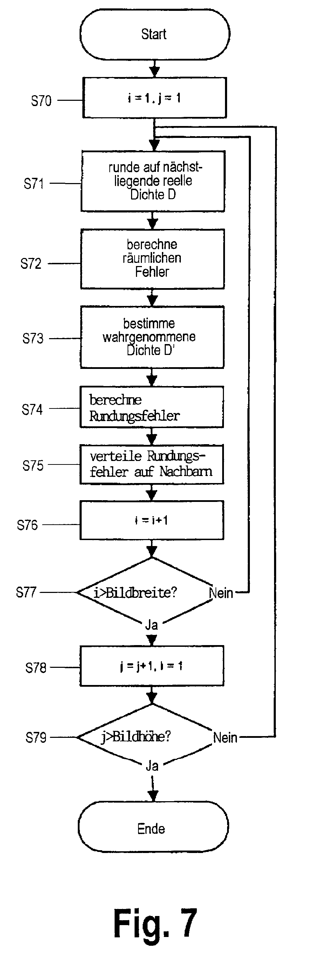

Bei dem Fehlerkorrekturverfahren kann z.B. gemäß dem Flussdiagramm nach Fig. 7 vorgegangen werden. Zu Beginn wird in einem Schritt S70 die Variable i und Variable j jeweils auf 1 gesetzt. In einem nächsten Schritt S71 wird auf die nächstliegende, diskrete, auf Messungen beruhende Dichte D, die einer bestimmten Bildpunktgröße k entspricht, gerundet, wie dies im Zusammenhang mit Fig. 6a und 6b erläutert wurde.

Danach wird in einem Schritt S72 der räumliche Fehler ($\Delta_{tot}$) bestimmt, der sich durch räumliche Abweichungen ($\Delta x_{pos}$, $\Delta y_{pos}$) benachbarter Bildpunkte von ihren Sollpositionen aufgrund der Vorrichtungscharakteristik ergibt, und zwar in Abhängigkeit von der Position i, j, wie oben beschrieben. Dann wird im Schritt S73 die wahrgenommene bzw. zu erwartende Dichte D' basierend auf dem räumlichen Fehler und der Dichte D, auf die gerundet wurde, bestimmt. Auch diese Bestimmung erfolgt positionsabhängig.

Als Nächstes wird ein Rundungsfehler im Schritt S74 berechnet, der sich durch den Übergang von kontinuierlichen Werten d der Matrixelemente auf diskrete Werte D' ergibt. Nach dieser Berechnung im Schritt S74 erfolgt die Verteilung des Rundungsfehlers auf die benachbarten Matrixelemente (Reproduktions-Bilddaten) im Schritt S75. Zusätzlich oder alternativ kann auch insbesondere bei einem zu großen Rundungsfehler das Verfahren für dasselbe i und j nochmals iterativ durchgeführt werden, wobei D solange variiert wird bis $\Delta d$ minimal ist.

Danach wird die Variable i um 1 hochgezählt (S76) und, falls die Variable i, die eine Zeilenvariable ist, die Bildbreite noch nicht überschritten hat, werden die Schritte S71 bis S76 wiederholt. Falls die Variable i die Bildbreite überschritten hat, wird die Variable j, die entlang der Spalten des Bildes zunimmt, um 1 im Schritt S78 erhöht und die Variable i auf 1 zurückgesetzt. Falls die Variable j die Bildhöhe nicht überschreitet, werden die Schritt S71 bis S78 wiederholt. Falls die Bildhöhe im Schritt S79 überschritten wird, endet das Verfahren.

Das obige Verfahren minimiert zuerst die durch die Vorrichtungscharakteristiken bedingten Farbwertabweichungen durch Bestimmung von D und dann die durch die Positionsabweichungen bedingten Dichteabweichungen $\Delta d$. Zur Durchführung der Korrektur können auch zuerst die Positionsabweichungen und dann die Farbwertabweichungen berücksichtigt werden.

Wie bereits oben erwähnt, kann die Erfindung bei den verschiedensten Bilddarstellungsvorrichtungen angewendet werden, wie z.B. Anzeigen, Bildschirme, Projektoren und Drucker. Bei Druckern kann es sich z.B. um belichtende Laserdrucker oder elektrostatische Laserdrucker oder DMDs handeln oder um sonstige Drucker, die nach dem Punktrasterverfahren arbeiten. Auch können Thermodrucker und Tintenstrahldrucker verwendet werden. Bei den Bilddarstellungsvorrichtungen kann es sich um Bilddarstellungsvorrichtungen der verschiedensten Größen handeln, wie sie z.B. im Bürobereich (z.B. Tischdrucker) oder auch im professionellen Bereich für große Formate verwendet werden. Insbesondere kann es sich um Bilddarstellungsvorrichtungen handeln, die auf dem Gebiet der Fotografie für fotografische Labors, insbesondere Minilabs, Anwendung finden.

Bei dem Fehlerdiffusionsverfahren werden vorrichtungsspezifische Fehler berücksichtigt, die die Fehler der spezifischen Bilddarstellungsvorrichtungen berücksichtigen. Der Fehler kann gleichmäßig mit Fehlerdiffusionsfaktoren auf benachbarte Bildpunkte verteilt oder weitergetragen werden. Das Weitertragen des Fehlers kann gerichtet (horizontal, vertikal, ...) für alle verschiedenen Fehlertypen erfolgen. Das Weitertragen des Fehlers kann aber auch gewichtet erfolgen. Die Wichtung oder Richtung des Fehlerweitertragens bzw. der Fehlerpropagation kann vom Fehlertyp abhängig gemacht werden. Die Fehlerkompensationsverfahren können mit Verschachtelungsdruckverfahren bzw. Interleave-Druckverfahren kombiniert werden.

## Patentansprüche

1. Verfahren zum Vermindern von Artefakten bei der auf Bilddaten, insbesondere fotografischen Bilddaten beruhenden Darstellung eines Bildes mit einer Vielzahl von Bildpunkten durch eine spezifische Bilddarstellungsvorrichtung, wobei die Bildpunkte Erscheinungseigenschaften aufweisen und durch die spezifische Bilddarstellungsvorrichtung in Antwort auf Steuerwerte erzeugt werden,

   mit folgenden Schritten:
   Vorrichtungscharakteristiken der Bilddarstellungsvorrichtung, die eine von den Eigenschaften der spezifischen Bilddarstellungsvorrichtung abhängige Beeinflussung der Erscheinungseigenschaften von Bildpunkten in Abhängigkeit von den Positionen der Bildpunkte beschreiben, werden bereitgestellt oder eingegeben (S12), Bilddaten werden eingegeben, und
   Steuerwerte für die Erzeugung der Bildpunkte durch die Bilddarstellungsvorrichtung werden basierend auf den den Bildpunkten zugeordneten Bilddaten unter Berücksichtigung der Beeinflussung der Erscheinungseigenschaften der zu erzeugenden Bildpunkte festgelegt, wobei die Beeinflussung in Abhängigkeit von den Positionen der Bildpunkte basierend auf den Vorrichtungscharakteristiken bestimmt wird.

2. Verfahren nach Anspruch 1, bei welchem die Steuerwerte für die Bildpunkterzeugung eines Bildpunktes unter Berücksichtigung der für benachbarte Bildpunkte auf Grund der Vorrichtungscharakteristiken zu erwartenden Beeinflussung der Erscheinungseigenschaften festgelegt werden.

3. Verfahren nach Anspruch 1 oder 2, bei welchem die Beeinflussung der Erscheinungseigenschaften Positionsabweichungen der Bildpunkte von Sollpositionen und/oder Abweichungen von Farbwerten der Bildpunkte von Sollfarbwerten umfassen.

4. Verfahren nach einem der Ansprüche 1 bis 3, bei welchem zu erwartende Erscheinungseigenschaften eines Unterbereichs, der aus mehreren benachbarten Bildpunkten besteht, aus den aufgrund der Vorrichtungscharakteristiken zu erwartenden Erscheinungseigenschaften der Bildpunkte des jeweiligen Unterbereiches bestimmt werden, und die Steuerwerte basierend auf den zu erwartenden Erscheinungseigenschaften der Unterbereiche so erzeugt werden, dass bei einer Reproduktion des Bildes mit den Steuerwerten die Abweichungen der Erscheinungseigenschaften der Unterbereiche von durch die eingegebenen Bilddaten definierten Soll-Erscheinungseigenschaften kleiner sind, als für den Fall, bei dem die Vorrichtungscharakteristiken nicht berücksichtigt werden.

5. Verfahren nach einem der Ansprüche 1 bis 4, bei welchem Unterbereiche des Bildes, die benachbarte Bildpunkte aufweisen, überlappen oder aneinander angrenzen, wobei der Farbwert eines jeden Unterbereichs durch die Erscheinungseigenschaften der Bildpunkte in dem Unterbereich und, falls ein Zwischenraum vorhanden ist, dem Farbwert des Zwischenraums, der optisch den Raum zwischen den Bildpunkten ausfüllt, bestimmt wird und wobei die Bilddaten jedem Unterbereich einen Sollfarbwert zuordnen, mit den folgenden Schritten:
   basierend auf den Bilddaten, den Vorrichtungscharakteristiken und den Positionen der Bildpunkte in den Unterbereichen werden die Steuerwerte so erzeugt, dass die Farbwerte der Unterbereiche möglichst wenig von ihren Sollfarbwerten abweichen.

6. Verfahren nach Anspruch 1 bis 5, bei welchem die Bildpunkte eines Bildes unter Verwendung einer Vielzahl von Bildpunkterzeugern erzeugt werden, wobei bei der Reproduktion eines Bildes ein einziger Bildpunkterzeuger eine Vielzahl von Bildpunkten erzeugt, wobei sich die Vorrichtungscharakteristiken und deren Positionsabhängigkeit aus Charakteristiken der Bildpunkterzeuger sowie der Zuordnung der Bildpunkterzeuger zu Positionen in einem zu erzeugenden Bild ergibt, wobei die Charakteristiken der Bildpunkterzeuger die Beeinflussung der Erscheinungseigenschaften der mit einem bestimmten Bildpunkterzeuger erzeugten Bildpunkte beschreiben.

**7.** Verfahren nach Anspruch 1 bis 6, **dadurch gekennzeichnet, dass** zur Festlegung der Steuerwerte zuerst die zu erwartende Farbwerte der den Bilddaten zugeordneten Bildpunkte basierend auf denjenigen Vorrichtungscharakteristiken, die die Farbwerterzeugung betreffen, bestimmt werden und dann basierend hierauf, unter Berücksichtigung von denjenigen Vorrichtungscharakteristiken, die Positionsabweichungen der Bildpunkte betreffen, die Steuerwerte berechnet werden.

**8.** Programm, das, wenn es in einem Computer geladen ist oder auf dem Computer läuft, den Computer veranlasst das Verfahren nach einem der Ansprüche 1 bis 7 durchzuführen, wobei die Vorrichtungscharakteristiken in das Programm eingebbar sind und/oder die Vorrichtungscharakteristiken Bestandteil des Programmcodes sind.

**9.** Bilddarstellungsvorrichtung, insbesondere Tintenstrahldrucker, Laserdrucker oder digitaler, fotografischer Printer mit einer Steuereinrichtung, die das Verfahren nach einem der Ansprüche 1 bis 7 durchführt, wobei die Steuerwerte für die Bildreproduktion verwendet werden und/oder über eine digitale Schnittstelle ausgebbar sind.

**10.** Fotografisches Labor, insbesondere Minilab oder Großraumlabor, mit mindestens einer Bilddarstellungsvorrichtung nach Anspruch 9 zur Reproduktion von fotografischen Bilddaten oder zur Ausgabe der Steuerwerte oder davon abgeleiteten Daten.

**11.** Verwendung des Verfahrens nach einem der Ansprüche 1 bis 7 oder des Programms nach Anspruch 8 oder der Bilddarstellungsvorrichtung nach Anspruch 9 zur Erzeugung fotografischer Darstellungen oder zur Ausgabe der Steuerwerte, die fotografische Bilder darstellen.

**Fig. 1**

Start
→ S10 Drucke Testmuster
→ S11 Erfasse Bilder von Testmustern
→ S12 Bestimme Erscheinungseigen- schaften abhängig von Positionen
→ S13 Berechne Abweichun- gen von Idealwerten
→ S14 Tolerierbar?
Ja → S15 Drucken → Ende
Nein → S16 Düsenreinigung?
Ja → S17 Düsenreinigung
Nein → S18 Korrektur

**Fig. 2**

Eingabe-Bitmap → Skalierung an Druck-auflösung → Transformation in den Drucker-farbraum → Halbton-verarbeitung → Extraktion von Drucker-streifen → Übertragung zu Druckköpfen

Rasterbildverarbeitung (RIP)

$(d_{C1}, d_{C2}, ..., d_{Cn}; N_1, N_2, ..., N_m)$

## Fig. 3

| Düsennummer | Tintenfarbe 1 | | | | | | | | | | Tintenfarbe 2 |
|---|---|---|---|---|---|---|---|---|---|---|---|
| | Tropfengröße 1 | | | Tropfengröße 2 | | | ... | Tropfengröße p | | | ... |
| | $\Delta x_{pos}$ | $\Delta y_{pos}$ | D | $\Delta x_{pos}$ | $\Delta y_{pos}$ | D | ... | $\Delta x_{pos}$ | $\Delta y_{pos}$ | D | ... | ... |
| 1 | | | | | | | | | | | |
| 2 | | | | | | | | | | | |
| 3 | | | | | | | | | | | |
| ... | | | | | | | | | | | |
| n | | | | | | | | | | | |

## Fig. 4

# Fig. 5

# Fig. 6a

# Fig. 6b

Start

S70 — i = 1, j = 1

S71 — runde auf nächstliegende reelle
Dichte D

S72 — berechne
räumlichen
Fehler

S73 — bestimme
wahrgenommene
Dichte D'

S74 — berechne
Rundungsfehler

S75 — verteile Rundungsfehler auf Nachbarn

S76 — i = i+1

S77 — i>Bildbreite?    Nein

Ja

S78 — j = j+1, i = 1

S79 — j>Bildhöhe?    Nein

Ja

Ende

# Fig. 7

Europäisches
Patentamt

**EUROPÄISCHER RECHERCHENBERICHT**

Nummer der Anmeldung

EP 00 12 4253

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 600 707 A (CANON KK) 8. Juni 1994 (1994-06-08) * Zusammenfassung; Abbildungen * --- | 1 | H04N1/50 H04N1/60 |
| A | EP 0 933 223 A (SEIKO EPSON CORP) 4. August 1999 (1999-08-04) * Zusammenfassung; Ansprüche * --- | 1 | |
| A | US 6 000 776 A (FUKUSHIMA HISASHI ET AL) 14. Dezember 1999 (1999-12-14) * Zusammenfassung; Ansprüche * --- | 1 | |
| A | EP 0 869 663 A (SEIKO EPSON CORP) 7. Oktober 1998 (1998-10-07) * Zusammenfassung; Ansprüche * ----- | 1 | |

RECHERCHIERTE SACHGEBIETE (Int.Cl.7)

H04N

Der vorliegende Recherchenbericht wurde für alle Patentansprüche erstellt

| Recherchenort | Abschlußdatum der Recherche | Prüfer |
|---|---|---|
| DEN HAAG | 12. Juli 2001 | Isa, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 00 12 4253

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-07-2001

| Im Recherchenbericht angeführtes Patentdokument | | Datum der Veröffentlichung | Mitglied(er) der Patentfamilie | | Datum der Veröffentlichung |
|---|---|---|---|---|---|
| EP 0600707 | A | 08-06-1994 | JP | 3029165 B | 04-04-2000 |
| | | | JP | 6171111 A | 21-06-1994 |
| | | | AT | 185662 T | 15-10-1999 |
| | | | DE | 69326741 D | 18-11-1999 |
| | | | DE | 69326741 T | 27-04-2000 |
| | | | KR | 133645 B | 23-04-1998 |
| | | | US | 6033055 A | 07-03-2000 |
| EP 0933223 | A | 04-08-1999 | JP | 11020207 A | 26-01-1999 |
| | | | JP | 11020208 A | 26-01-1999 |
| | | | WO | 9901286 A | 14-01-1999 |
| US 6000776 | A | 14-12-1999 | JP | 2915071 B | 05-07-1999 |
| | | | JP | 4018361 A | 22-01-1992 |
| | | | JP | 4018362 A | 22-01-1992 |
| | | | JP | 2938932 B | 25-08-1999 |
| | | | JP | 4028548 A | 31-01-1992 |
| | | | JP | 2915081 B | 05-07-1999 |
| | | | JP | 4028550 A | 31-01-1992 |
| | | | JP | 2915082 B | 05-07-1999 |
| | | | JP | 4028551 A | 31-01-1992 |
| | | | JP | 2915083 B | 05-07-1999 |
| | | | JP | 4028554 A | 31-01-1992 |
| | | | JP | 2915084 B | 05-07-1999 |
| | | | JP | 4028555 A | 31-01-1992 |
| | | | JP | 4040164 A | 10-02-1992 |
| | | | JP | 2938934 B | 25-08-1999 |
| | | | JP | 4039045 A | 10-02-1992 |
| | | | JP | 2915093 B | 05-07-1999 |
| | | | JP | 4041245 A | 12-02-1992 |
| | | | DE | 69112916 D | 19-10-1995 |
| | | | DE | 69112916 T | 28-03-1996 |
| | | | EP | 0461759 A | 18-12-1991 |
| | | | EP | 0663296 A | 19-07-1995 |
| | | | EP | 0667241 A | 16-08-1995 |
| | | | US | 5353052 A | 04-10-1994 |
| EP 0869663 | A | 07-10-1998 | JP | 10285415 A | 23-10-1998 |
| | | | JP | 10278350 A | 20-10-1998 |
| | | | JP | 10278351 A | 20-10-1998 |

EPO FORM P0461

Für nähere Einzelheiten zu diesem Anhang : siehe Amtsblatt des Europäischen Patentamts. Nr.12/82